# FASCICULE DE BREVET EUROPEEN

(11) **EP 1 938 474 B1**
(45) Date de publication et mention de la délivrance du brevet: **03.07.2013**
(21) Numéro de dépôt: 06831215.6
(22) Date de dépôt: 22.09.2006
(51) Int. Cl.: H04B 7/185

(54) **DISPOSITIF DE MULTIPLEXAGE SEMI-TRANSPARENT DE FLUX DE DONNEES, POUR UN SATELLITE DE COMMUNICATION**
VORRICHTUNG FÜR EINEN SATELLITEN MIT HALBDURCHLÄSSIGER MULTIPLEXIERUNG EINES DATENSTROMES
DEVICE FOR SEMI-TRANSPARENT MULTIPLEXING OF DATA STREAM FOR A COMMUNICATION SATELLITE

(30) Priorité: 23.09.2005 FR 0552835
(43) Date de publication de la demande: 02.07.2008
(73) Titulaire: THALES, 92200 Neuilly sur Seine (FR)
(72) Inventeur: RIGAL, Christian, F-31120 Portet sur Garonne (FR); GAYRARD, Jean-Didier, F-31100 Toulouse (FR)
(74) Mandataire: Esselin, Sophie
(86) Numéro de dépôt international: PCT/FR2006/050927
(87) Numéro de publication internationale: WO 2007/034123

(56) Documents cités:
- EP-A- 1 104 956

## Description

L'invention concerne les réseaux de communication comportant au moins un satellite de communication assurant des liaisons par voie d'ondes entre au moins une passerelle satellitaire et des terminaux de communication, et plus précisément l'insertion au niveau d'un tel satellite de trafics destinés à des terminaux de communication.

On entend ici par « terminal de communication » tout équipement de communication, radio ou filaire, fixe ou mobile (ou portable) capable de se connecter à un réseau satellitaire afin d'échanger des données sous la forme de signaux avec un autre équipement. Il pourra donc s'agir, par exemple, d'une station terrestre de communication satellitaire, d'une passerelle satellitaire, d'un téléphone fixe ou mobile, ou d'un terminal de réception individuel ou collectif, ou d'un ordinateur fixe ou portable ou d'un assistant personnel numérique (ou PDA) équipé d'un module de communication satellitaire.

Comme le sait l'homme de l'art, certains standards de communication satellitaires, comme par exemple DVB-RCS (pour « Digital Video Broadcasting - Retum Channel by Satellite»), ont été conçus pour un trafic dit en étoile c'est-à-dire des terminaux de communication vers les passerelles satellitaires, et réciproquement. Plus précisément, les communications entre une passerelle satellitaire et des terminaux de communication empruntent une voie dite « aller », passant par un satellite de communication, tandis que les communications entre des terminaux de communication et une passerelle satellitaire empruntent une voie dite « retour », passant par un satellite de communication.

Dans le cas, notamment, du standard DVB, les flux qui empruntent la voie aller sont modulés selon le standard DVB-S2 (de type TDM), tandis que les flux qui empruntent la voie retour sont modulés selon le standard DVB-RCS (de type MF-TDMA). En d'autres termes, un terminal de communication. émet en DVB-RCS et reçoit en DVB-S2, tandis qu'une passerelle satellitaire émet en DVB-S2 et reçoit en DVB-RCS.

Dans un trafic en étoile, un trafic entre deux terminaux de communication couplés à un même satellite (trafic « peer to peer » - pair à pair) doit transiter par la passerelle satellitaire, ce qui double le délai de transmission et mobilise deux fois plus de ressources, lesquelles sont précieuses dans le cas d'une liaison satellitaire.

Pour éviter le doublement du délai de transmission, une première solution consiste par exemple à utiliser un satellite répéteur dédié qui ne sert que de relais transparent entre les terminaux de communication. Le trafic est alors dit « maillé ». Les flux du trafic n'étant pas traités dans le satellite répéteur (mode dit transparent), la compatibilité des terminaux de communication avec le standard DVB n'est alors plus assurée. En effet, les terminaux de communication émettent et reçoivent en DVB-RCS, si bien qu'ils doivent être équipés d'un démodulateur multiporteuse et adaptés à la synchronisation TDMA. Or, un démodulateur MF-TDMA est relativement onéreux. En outre, cette solution n'est pas compatible avec ce que l'on appelle l'interconnexion de couvertures satellitaires.

Une deuxième solution consiste à démoduler dans le satellite de communication le trafic maillé provenant de la voie retour afin de l'insérer dans une voie aller dédiée audit trafic maillé. Dans ce cas, les terminaux de communication doivent être équipés de deux démodulateurs de voie aller s'ils veulent exploiter les trafics de types maillé et étoilé simultanément.

Une troisième solution consiste à démoduler dans le satellite de communication, d'une part, le trafic (maillé) provenant de ,la voie retour et destiné à la voie aller, et d'autre part, le trafic (étoilé) provenant de la voie aller et destiné à la voie retour, afin d'insérer le trafic maillé dans la voie aller. Les terminaux de communication sont ainsi conformes au standard DVB, et la synchronisation TDMA est assurée par le satellite de communication. Ce mode de fonctionnement du satellite de communication est dit régénératif, par opposition au mode transparent de la première solution. L'inconvénient de cette solution réside dans le fait que l'intégralité du trafic étoilé (empruntant la voie aller) doit faire l'objet d'une démodulation, puis d'un traitement et enfin d'une remodulation dans le satellite de communication, y compris lorsqu'il n'y a pas de trafic maillé à insérer dans la voie aller, alors même que la proportion de trafic maillé est généralement faible, typiquement inférieure à 30%, et de surcroît variable. Par exemple, dans le cas d'une application relative à un accès à l'Internet, seules les applications interactives et les liens entre « spots » (ou zones de couverture) différent(e)s nécessitent effectivement une communication maillée (ou à « simple bond »). Le processeur de traitement régénératif embarqué est donc largement surdimensionné par rapport aux besoins réels, ce qui est pénalisant en matière de consommation et donc limite les capacités du satellite et de ce fait pénalise la rentabilité de l'installation.

EP-A1-1 104 956 divulgue un satellite permettant un flux de données de terminal à terminal via le satellite sans forcer les données à passer la passerelle.

Aucune solution connue n'apportant une entière satisfaction, l'invention a donc pour but d'améliorer la situation.

Elle propose à cet effet un dispositif de traitement de flux de données, pour un satellite de communication d'un réseau de communication, comprenant des moyens de traitement chargés, en cas de réception d'un premier flux de données entrant dont la porteuse présente une première modulation et comportant des blocs d'insertion choisis en des emplacements choisis (correspondants à des instants choisis) :
- de détecter les blocs d'insertion et au moins une caractéristique de la porteuse du premier flux entrant, choisie parmi la fréquence, la phase, le rythme et l'amplitude,
- de moduler, conformément à la première modulation et compte tenu de chaque caractéristique détectée, des paquets de données à transmettre vers une destination commune avec celle du premier flux entrant, et
- de remplacer par les paquets modulés certains au moins des blocs d'insertion détectés dans le premier flux entrant qui n'a pas été démodulé, le remplacement étant effectué par des symboles cohérents avec les symboles du reste de la porteuse étant donné que la partie du dit premier flux entrant remplacée reproduit ladite caractéristique de ladite porteuse dudit premier flux, afin que ce dernier soit transmis par le satellite, avec la première modulation, vers la destination commune.

On entend ici par « flux entrant » un flux montant parvenant dans un satellite de communication et provenant soit d'une passerelle de communication, soit d'un terminal de communication, soit encore d'un autre satellite de communication.

Le premier flux entrant objet de l'insertion n'étant pas démodulé, et les paquets de données insérés étant modulés selon chaque caractéristique détectée (et de préférence toutes) de la porteuse du premier flux, le flux descendant qui résulte de l'insertion de paquets dans ledit premier flux entrant est alors homogène et peut être démodulé par un terminal ou une station destinataire comme s'il avait été constitué par un unique modulateur.

Le dispositif de traitement de flux selon l'invention peut comporter d'autres caractéristiques qui peuvent être prises séparément ou en combinaison, et notamment :
- ses moyens de traitement sont préférentiellement agencés de manière à détecter les caractéristiques de fréquence, de phase, de rythme et d'amplitude des porteuses ;
- ses moyens de traitement peuvent comporter i) des moyens d'analyse chargés de détecter chaque caractéristique des porteuses des premiers flux entrants reçus, ii) des moyens de modulation chargés de moduler les paquets à transmettre, conformément à la première modulation et compte tenu de chaque caractéristique détectée par les moyens d'analyse, et iii) des moyens d'insertion chargés de remplacer certains au moins des blocs d'insertion détectés par les paquets qui ont été modulés par les moyens de modulation, afin que le premier flux entrant dans lequel ils sont insérés puisse être transmis ;
- ses moyens de traitement peuvent comporter des moyens de détection chargés, en présence d'un premier flux entrant comprenant des blocs d'insertion comportant un préambule défini par des symboles choisis, de détecter une partie au moins des symboles qui définissent les préambules ;
   ➢ les moyens de détection peuvent alors être chargés de mesurer l'intervalle de temps entre les détections de préambules, et de comparer chaque intervalle mesuré à un intervalle seuil, afin de n'autoriser le remplacement d'un bloc d'insertion par un paquet à transmettre modulé que lorsqu'un intervalle mesuré est sensiblement égal à cet intervalle seuil ou à un multiple entier de ce dernier ;
- dans une première version numérique, il peut comprendre i) des premiers moyens de conversion placés en amont de ses moyens d'analyse et/ou moyens de détection et chargés de convertir en signaux numériques des premiers flux entrants se présentant sous forme analogique, ii) des seconds moyens de conversion placés en aval de ses moyens d'insertion et chargés de convertir en signaux analogiques les premiers flux entrants se présentant sous une forme numérique, et iii) des moyens de mémorisation couplés aux moyens de modulation et aux moyens d'insertion et chargés de stocker les paquets à transmettre modulés qui sont en attente de transmission ;
   ➢ il peut comprendre des moyens de cadencement chargés de définir une cadence choisie de fonctionnement pour les moyens de traitement et les premiers et seconds moyens de conversion ;
   ➢ ses moyens de détection peuvent être chargés de dupliquer les premiers flux entrants de manière à détecter les emplacements des blocs d'insertion qu'ils contiennent, et ses moyens d'analyse peuvent être chargés de dupliquer ces premiers flux entrants afin de détecter chaque caractéristique (choisie parmi la fréquence, la phase, le rythme et l'amplitude) ;
- dans une version analogique, ses moyens d'analyse peuvent être chargés de prélever une partie des premiers flux entrants afin de détecter chaque caractéristique (choisie parmi la fréquence, la phase, le rythme et l'amplitude) et de délivrer sur une sortie des signaux représentatifs de chaque caractéristique détectée. Il comprend alors également des premiers moyens de commutation comprenant une entrée propre à recevoir des paquets (en attente de transmission), une entrée de contrôle et une sortie propre à alimenter les moyens de modulation avec les paquets (en attente de transmission) en cas de placement dans un état fermé. Par ailleurs, ses moyens de traitement comprennent des seconds moyens de commutation comportant une entrée couplée à la sortie des moyens d'analyse pour recevoir des signaux représentatifs de chaque caractéristique détectée, une entrée de contrôle et une sortie propre à alimenter les moyens de modulation avec les signaux représentatifs de chaque caractéristique détectée en cas de placement dans un état fermé. Dans ce cas, les moyens d'insertion sont par exemple agencés sous la forme d'un commutateur comportant une première entrée couplée à la sortie des moyens de modulation, une deuxième entrée alimentée en premiers flux entrants, une troisième entrée de contrôle et une sortie propre à être couplée à la première ou à la deuxième entrée en cas de placement dans un premier ou un second état afin de délivrer les paquets modulés à transmettre ou les premiers flux entrants à transmettre. Par ailleurs, les moyens de détection sont par exemple agencés pour prélever une partie des premiers flux entrants de manière à détecter les emplacements des blocs d'insertion qu'ils contiennent et à délivrer, d'une part, aux premiers et seconds moyens de commutation des signaux de contrôle pour les placer dans un état fermé en cas de détection d'un bloc d'insertion, et d'autre part, aux moyens d'insertion des signaux de contrôle pour les placer dans le premier ou second état en cas de détection ou d'absence de détection d'un bloc d'insertion ;
- ses moyens de traitement peuvent comporter des moyens de retardement, implantés en aval des moyens de détection et/ou moyens d'analyse et en amont des moyens d'insertion, et chargés de retarder un premier flux entrant de manière à permettre la détection des emplacements des blocs d'insertion;
- dans une seconde version numérique, il peut comprendre :
   - au moins deux voies de traitement pouvant recevoir chacune des premiers flux entrants provenant d'au moins deux canaux différents et comportant chacune i) des premiers moyens de conversion chargés de convertir en signaux numériques des premiers flux entrants se présentant sous une forme analogique, ii) des moyens d'analyse chargés de détecter chaque caractéristique des porteuses des premiers flux entrants délivrés par les premiers moyens de conversion et de délivrer des premiers signaux représentatifs de chaque caractéristique détectée, et iii) des moyens de détection chargés, en présence d'un premier flux entrant comprenant des blocs d'insertion comportant un préambule défini par des symboles choisis, de détecter une partie au moins des symboles définissant les préambules à l'intérieur de fenêtres temporelles définies par des informations de signalisation et de délivrer des deuxièmes signaux représentatifs des positions temporelles de certains au moins des blocs d'insertion,
   - des moyens de contrôle chargés i) de sélectionner le premier flux entrant de l'une des voies de traitement en fonction de troisièmes signaux de signalisation, ii) de définir des informations de signalisation représentatives de fenêtres temporelles de détection à partir desdits troisièmes signaux de signalisation et de communiquer ces informations de signalisation aux moyens de détection concernés, et iii) de délivrer le premier flux entrant sélectionné accompagné des deuxièmes signaux représentatifs des positions temporelles des blocs d'insertion à remplacer,
   - des moyens de modulation chargés de moduler les paquets à transmettre, conformément à la première modulation et compte tenu des premiers signaux délivrés par les voies de traitement, et de remplacer par les paquets modulés, en fonction des deuxièmes signaux, certains au moins des blocs d'insertion détectés et contenus dans le premier flux entrant, afin de délivrer un premier flux entrant à paquets insérés, et
   - des seconds moyens de conversion chargés de convertir en signaux analogiques les premiers flux entrants à paquets insérés se présentant sous une forme numérique, délivrés par les moyens de modulation ;
- les blocs d'insertion peuvent par exemple présenter une dimension (ou durée) au moins égale à celle d'un paquet de données contenu dans un flux ;
   ➢ les moyens de traitement peuvent être chargés, en présence d'un premier flux entrant comportant des groupes de premier et second blocs d'insertion consécutifs, de remplacer certains au moins des seconds blocs d'insertion par des paquets à transmettre modulés ;
- les dimensions des blocs d'insertion peuvent éventuellement varier d'un premier flux entrant à l'autre ;
- ses moyens de traitement peuvent être chargés de traiter des premiers flux entrants qui ont subi au moins un changement de fréquence ;
- ses moyens de traitement peuvent être chargés de traiter des premiers flux entrants transmis par un équipement de communication du réseau comme par exemple une passerelle de communication satellitaire, un terminal de communication, ou un satellite de communication ;
- ses moyens de traitement utilisent préférentiellement les troisièmes signaux de signalisation afin d'insérer des paquets à transmettre dans des premiers flux entrants sans introduire de retard.

L'invention propose également un récepteur de flux de données, pour un satellite de communication, comprenant au moins une voie de réception pouvant recevoir des premiers flux entrants sous forme analogique, associés à un canal, et au moins un dispositif de traitement de flux du type de celui présenté ci-avant et couplé à au moins une voie de réception.

Un tel récepteur peut par exemple comprendre au moins deux voies de réception couplées à un unique dispositif de traitement de flux. Dans ce cas, les voies de réception sont par exemple chacune couplées au dispositif de traitement de flux par l'intermédiaire d'au moins des moyens de couplage comportant une entrée, une première sortie, et une seconde sortie couplée au dispositif, et on prévoit des moyens de sélection, comprenant une entrée pouvant être alimentée en premiers flux entrants délivrés par le dispositif de traitement de flux, des entrées couplées aux premières sorties respectives des moyens de couplage, et des sorties en nombre égal au nombre de voies de réception, et chargés de délivrer sur l'une des sorties les premiers flux **entrants** parvenus sur l'une des entrées, en fonction de signaux de signalisation.

Par ailleurs, le récepteur peut également comprendre des moyens de démodulation chargés de démoduler des seconds flux entrants modulés pour délivrer des paquets de données démodulés propres à être insérés dans des premiers flux entrants.

De plus, le récepteur peut comprendre des moyens de commutation comprenant au moins deux entrées, propres à recevoir des premiers flux entrants provenant de passerelles de communication satellitaire différentes, et au moins une sortie propre à alimenter sélectivement en premiers flux entrants des voies de réception couplées à un dispositif de traitement de flux. Ainsi, un même dispositif peut être utilisé pour insérer des paquets à transmettre dans des premiers flux entrants dont les porteuses sont différentes.

L'invention propose également un satellite de communication, pour un réseau de communication, équipé d'au moins un dispositif de traitement de flux du type de celui présenté ci-avant.

L'invention propose également un satellite de communication, pour un réseau de communication, équipé d'au moins un récepteur du type de celui présenté ci-avant.

L'invention propose également une passerelle de communication satellitaire, pour un réseau de communication comportant au moins un satellite de communication du type de celui présenté ci-avant, et chargée de générer à destination du satellite des premiers flux entrants dont la porteuse présente une première modulation et qui comportent des blocs d'insertion en des emplacements choisis.

L'invention est particulièrement bien adaptée, bien que de façon non exclusive, aux réseaux de communication satellitaire fonctionnant selon le standard DVB (DVB-RCS et DVB-S2) ou tout autre format de transmission par paquets. Elle s'applique à la diffusion par satellites de programmes de télévision numérique, notamment en haute définition, et à la transmission de contenus multimédia.

D'autres caractéristiques et avantages de l'invention apparaîtront à l'examen de la description détaillée ci-après, et des dessins annexés, sur lesquels :
- la figure 1 illustre de façon très schématique les voies de communication entre une passerelle satellitaire et des terminaux de communication, via un satellite de communication,
- la figure 2 illustre de façon très schématique le positionnement d'un dispositif de traitement de flux selon l'invention par rapport aux voies de communication illustrées sur la figure 1,

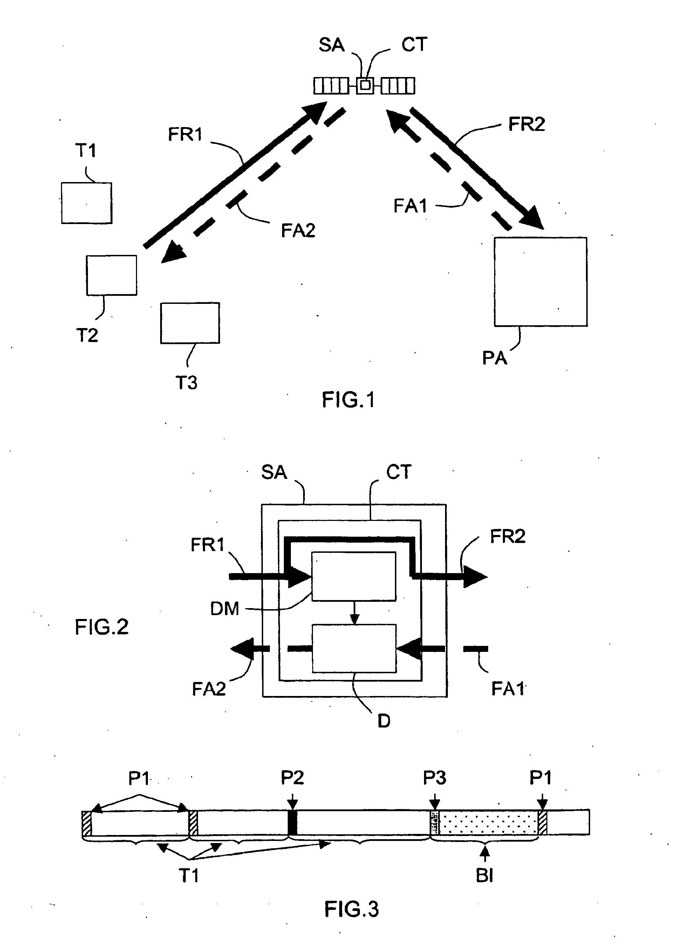

- la figure 2 illustre de façon très schématique un exemple de flux descendant comportant un bloc d'insertion destiné à étre remplacé par des paquets de données à transmettre,

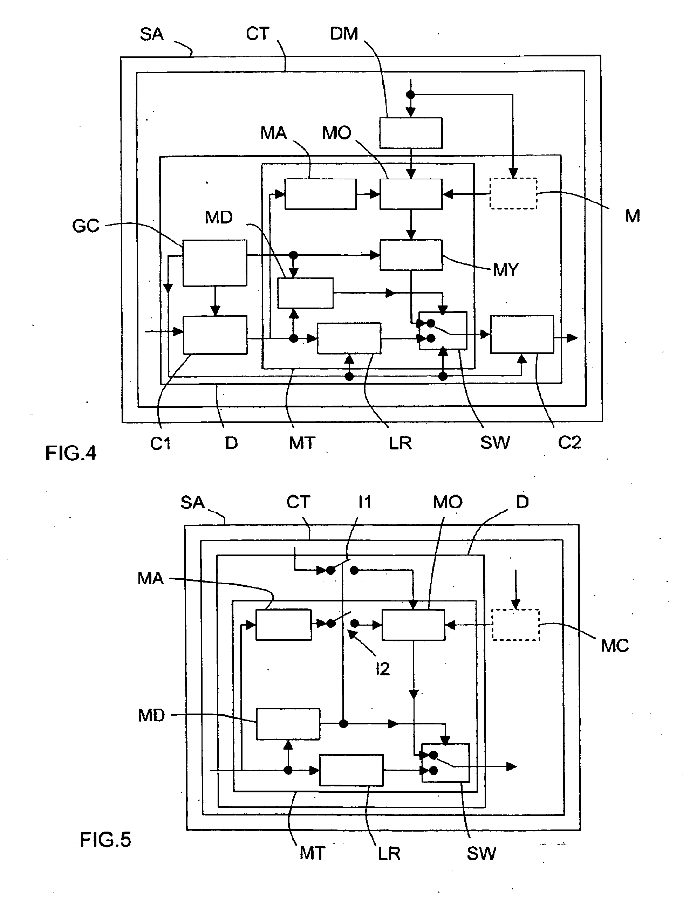

- la figure 4 illustre de façon très schématique un premier exemple de réalisation d'un dispositif de traitement de flux selon l'invention,
- la figure 5 illustre de façon très schématique un deuxième exemple de réalisation d'un dispositif de traitement de flux selon l'invention,

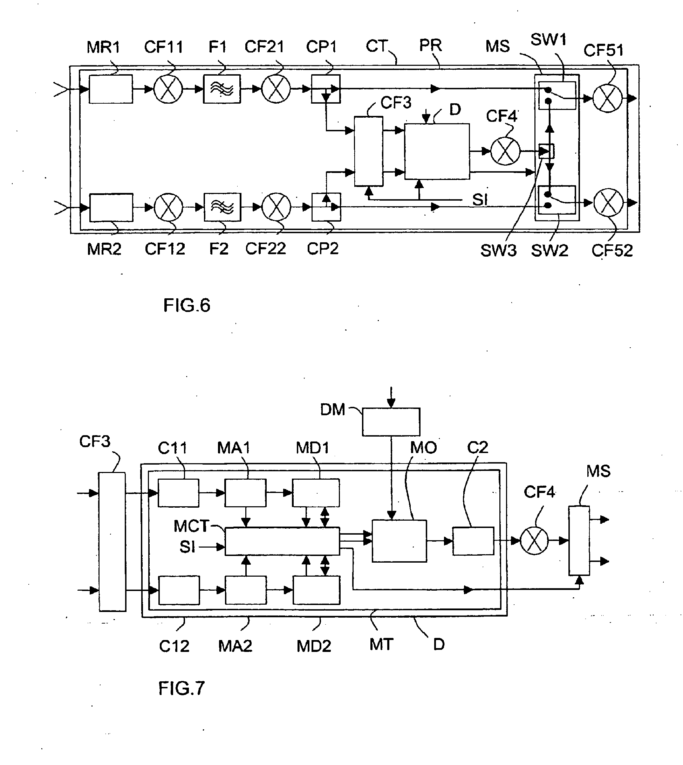

- la figure 6 illustre de façon très schématique un exemple de réalisation d'une carte de traitement (ou récepteur) de flux descendants provenant de deux canaux différents, et
- la figure 7 iliustre de façon très schématique un troisième exemple de réalisation d'un dispositif de traitement de flux selon l'invention pouvant faire partie d'une carte de traitement (ou récepteur) du type de celle illustrée sur la figure 6.

Les dessins annexés pourront non seulement servir à compléter l'invention, mais aussi contribuer à sa définition, le cas échéant.

L'invention a pour objet de permettre l'insertion dans des flux dits descendants provenant d'une passerelle satellitaire (ou « gateway »), au niveau d'un satellite de (télé)communication, de trafics (ou flux) destinés à des terminaux de communication.

Comme cela est schématiquement illustré sur la figure 1, un réseau de communication satellitaire comprend au moins un satellite de communication SA permettant l'échange de trafics ou flux de données entre des équipements de communication du réseau, comme par exemple une ou plusieurs passerelles de communication satellitaire PA (ci-après appelées « passerelles »), des terminaux de communication satellitaire Ti (ci-après appelés « terminaux ») et éventuellement un ou plusieurs autres satellites de communication. La transmission des flux de la passerelle satellitaire PA vers les terminaux Ti se fait sur une voie dite « aller » FA1 et FA2, tandis que la transmission des flux des terminaux Ti vers la passerelle satellitaire PA se fait sur une voie dite « retour » FR1 et FR2. Par ailleurs, on appelle généralement « flux montant » un flux entrant dans un satellite SA et provenant par exemple d'une passerelle PA ou d'un terminal Ti, et « flux descendant » un flux sortant d'un satellite SA, et destiné par exemple à une passerelle PA ou un terminal Ti.

Dans l'exemple de la figure 1, trois terminaux T1 à T3 (i = 1 à 3) ont été illustrés. Mais, le nombre de terminaux Ti n'est pas limité à cette valeur. Il peut en effet prendre n'importe quelle valeur non nulle. De même, on a représenté une unique passerelle PA, mais le réseau peut en comporter plusieurs. En outre, on a représenté un unique satellite SA, mais le réseau peut en comporter plusieurs.

On entend ici par « terminal » tout équipement de communication, radio ou filaire, fixe ou mobile (ou portable) capable de se connecter à un réseau satellitaire afin d'échanger des données sous la forme de signaux avec un autre équipement, et plus précisément de recevoir des flux radio descendants dont la porteuse présente une première modulation et d'émettre des flux radio montants dont la porteuse présente une seconde modulation. Il pourra donc s'agir, par exemple, d'une station terrestre de relais de communication satellitaire, d'une passerelle satellitaire, d'un téléphone fixe ou mobile, ou d'un terminal de réception individuel ou collectif, ou d'un ordinateur fixe ou portable ou d'un assistant personnel numérique (ou PDA) équipé d'un module de communication satellitaire.

Dans ce qui suit, on considère à titre d'exemple non limitatif que les flux sont échangés entre la passerelle PA et les terminaux Ti selon le standard DVB (pour « Digital Video Broadcasting ») qui est adapté à l'accès à l'Internet et à la transmission de contenus multimédia. Plus précisément, les flux empruntant la voie aller FA1 et FA2 sont modulés selon le standard DVB-S2 (de type TDM), tandis que les flux empruntant la voie retour FR1 et FR2 sont modulés selon le standard DVB-RCS (de type MF-TDMA). Bien entendu, l'invention n'est pas limitée à cette application. Elle concerne également la diffusion par satellites de programmes de télévision numérique, notamment en haute définition, et à la transmission de contenus multimédia.

Comme indiqué précédemment, l'invention est destinée à permettre l'insertion dans des premiers flux de données parvenus dans le satellite SA, dont les porteuses présentent des (premières) modulations et qui proviennent, par exemple, de la voie aller (c'est-à-dire de la passerelle PA), de paquets de données en attente de transmission dans le satellite SA, et par exemple extraits de seconds flux entrants dont les porteuses présentent des secondes modulations et qui proviennent, par exemple, de la voie retour FR1 (c'est-à-dire d'un terminal Ti).

Il est important de noter que l'invention s'applique à des paquets de données extraits dans le satellite SA de seconds flux de toute origine, et en attente de transmission.

Pour ce faire, l'invention propose d'implanter un dispositif de traitement de flux de données D dans une carte de traitement de flux CT (ou récepteur) installée dans le satellite SA et chargée de réceptionner au moins les premiers flux entrants et de les amplifier avant de les retransmettre en direction des terminaux Ti. Plus précisément, le dispositif D est chargé de traiter les premiers flux entrants parvenus au niveau du satellite SA, par exemple sur la première partie FA1 de la voie aller (et provenant de la passerelle PA) avant qu'ils ne soient retransmis, par exemple vers des terminaux Ti destinataires sur la seconde partie FA2 de cette voie aller.

On entend ici par « traiter » le fait d'insérer des paquets de données, extraits d'un second flux entrant dont la porteuse présentait au moment de la réception une seconde modulation, et en attente de transmission, dans le trafic montant, par exemple de la voie aller. Les paquets de données en attente de transmission sont, par exemple, des paquets extraits de certains seconds flux montants empruntant, par exemple, la première partie FR1 de la voie retour, et donc ayant fait l'objet d'une démodulation au moyen d'un démodulateur DM de type DVB-RCS, implanté par exemple sur la carte de traitement MT. Ce mode d'extraction de paquets dans des satellites est notamment utilisé dans certains satellites en exploitation, comme par exemple Amazonas et Eutelsat W6.

II est important de noter, comme cela est illustré sur la figure 2, que les flux entrants, qui ne contiennent pas de paquets de données devant être insérés dans les flux sortants, ne sont pas démodulés par le démodulateur DM. Ils sont amplifiés et éventuellement retardés dans le satellite SA avant d'être retransmis vers leur destination (par exemple sur la seconde partie FR2 de la voie retour, en direction de la passerelle PA). Pour ces flux le satellite SA ne sert donc que de relais transparent.

Un dispositif de traitement de flux D selon l'invention comprend un module de traitement MT couplé au démodulateur DAM et chargé d'insérer des paquets de données extraits et en attente de transmission, notamment ceux qui ont été démodulés par le démodulateur DM, dans des premiers flux entrants agencés de façon particulière au niveau de la passerelle PA. On entend ici par « paquet extrait (en attente de transmission) » un paquet de données extrait d'un second flux entrant dont la porteuse présentait à réception dans le satellite SA une seconde modulation. Un paquet extrait est donc démodulé, commuté, éventuellement dupliqué (dans le cas d'une diffusion de type « multicast »), au niveau cellule ATM ou paquet MPEG lorsque sa modulation initiale était de type DVB-RCS.

Plus précisément, la passerelle PA génère (et transmet) des premiers flux dont la porteuse présente la première modulation (ici de type DVB-S2) et qui comportent des blocs d'insertion BI choisis en des emplacements choisis, destinés à être, au moins pour certains, remplacés dans le satellite SA par des paquets de données en attente de transmission. Un exemple schématique d'un tel flux est illustré sur la figure 3.

Dans cet exemple, le premier flux comporte des paquets de données T1, comprenant soit un préambule (hachuré) P1 soit un préambule (noir) P2, et un bloc d'insertion BI, comme par exemple un paquet de bourrage, comprenant un préambule (gris) P3. Ces préambules P1, P2 et P3 sont constitués de symboles connus, mais de types différents. Ici, les préambules hachurés P1 appartiennent à des paquets qui ne sont pas suivis d'un bloc d'insertion BI, et les préambules noirs P2 appartiennent à des paquets qui sont suivis d'un bloc d'insertion BI.

Il est important de noter, d'une part, que c'est la passerelle PA qui définit au sein de ces premiers flux les proportions respectives des paquets T1 et des blocs d'insertion BI, ainsi que la taille des blocs d'insertion BI, compte tenu du trafic à insérer au niveau du satellite SA, et d'autre part, que les proportions et tailles peuvent éventuellement varier d'un premier flux à l'autre en fonction de l'évolution du trafic à insérer au niveau du satellite SA. Par exemple, on peut prévoir de placer un bloc d'insertion BI tous les 5 ou 10 paquets T1. Dans certains modes de réalisation, il est possible d'utiliser plusieurs dispositifs D en parallèle afin d'insérer plus de trafic au niveau d'un satellite tout en conservant un rapport entre les paquets et les blocs d'insertion raisonnable.

Le module de traitement MT du dispositif D est tout d'abord chargé de détecter, d'une part, les blocs d'insertion BI qui sont contenus dans les premiers flux entrants reçus (ici) sur la voie aller FA1, et d'autre part, au moins une caractéristique de la porteuse de ces mêmes premiers flux entrants reçus, choisie parmi sa fréquence, sa phase, son rythme (ou rythme symbole) et son amplitude (ou puissance).

Il est important de noter que la détection peut porter sur l'une au moins des caractéristiques de porteuse précitées, mais qu'il est préférable qu'elle porte sur les quatre. Dans ce qui suit, on considère à titre d'exemple non limitatif que l'on détecte les quatre caractéristiques (fréquence, phase, rythme et amplitude) de la porteuse.

Il est également chargé de moduler, conformément à la première modulation ou forme d'onde (ici l'un des états possibles de modulation et de codage de type DVB-S2) et compte tenu des caractéristiques (de fréquence, de phase, de rythme et d'amplitude) qu'il a détectées, des paquets extraits qui sont en attente de transmission dans le satellite SA et qui sont destinés, par exemple, à au moins un terminal Ti.

Il est enfin chargé de remplacer par les paquets extraits qu'il a modulés certains au moins des blocs d'insertion BI qu'il a détectés dans un premier flux entrant, afin que ce dernier soit transmis par le satellite SA, avec la première modulation, vers leur destination commune (par exemple des terminaux Ti). Les paquets en attente de transmission sont ainsi multiplexés dans les premiers flux entrants.

Le traitement subi par le premier flux entrant est de type transparent, puisqu'il ne fait l'objet que d'un remplacement de blocs d'insertion (comme par exemple des paquets de bourrage) BI par des paquets de données, et non d'une démodulation suivie d'une remodulation (comme c'est le cas dans un traitement dit régénératif). Il est important de noter qu'il ne s'agit ici que d'un remplacement par des symboles qui sont cohérents avec les symboles du reste de la porteuse étant donné que la partie d'un premier flux entrant remplacée reproduit les caractéristiques de fréquence, de phase, de rythme (ou rythme symbole) et d'amplitude de la porteuse de ce premier flux entrant.

Le dispositif D selon l'invention peut être réalisé de différentes façons.

On se réfère maintenant à la figure 4 pour décrire un premier exemple de réalisation d'un dispositif D selon l'invention. Il s'agit ici d'un mode de réalisation numérique.

Dans ce mode de réalisation, le dispositif D comprend un module de traitement MT (assurant les fonctions précitées), un premier convertisseur C1, un module de génération de cadence GC et un second convertisseur C2, ainsi qu'éventuellement un module de contrôle MC de type ACM (pour « Adaptive Coding Modulation »).

Le premier convertisseur C1 est chargé de convertir en données numériques les premiers flux entrants analogiques à traiter (parvenus ici au niveau de la carte de traitement CT). Ces premiers flux entrants analogiques peuvent avoir fait l'objet d'une ou plusieurs conversions de fréquence. Par exemple, lorsqu'ils sont reçus avec une fréquence de 30 GHz, ils peuvent faire l'objet d'une première conversion de fréquence afin de présenter une fréquence d'environ 20 GHz (RF), puis d'un filtrage passe-bande, puis d'une deuxième conversion de fréquence (RF→FI) afin de présenter une fréquence dite intermédiaire (ou FI, correspondant à la bande L, par exemple). Cette deuxième conversion de fréquence peut être également suivie d'une troisième conversion de fréquence (FI→BB) afin de présenter une fréquence dite en bande de base (ou « baseband » BB).

Le second convertisseur C2 est chargé de convertir en données analogiques les premiers flux entrants numériques délivrés par la sortie du dispositif D et devant être transmis par le satellite SA vers les terminaux destinataires Ti (après conversion(s) de fréquence et amplfication).

Le module de génération de cadence (ou « cadenceur ») GC est chargé de définir une cadence choisie de fonctionnement pour le module de traitement MT et les premier C1 et second C2 convertisseurs. En d'autres termes, il est chargé de fournir des signaux d'horloge permettant de synchroniser les éléments du dispositif D à contrainte temporelle.

L'éventuel module de contrôle MC (de type ACM) est chargé de lutter contre les affaiblissements que subissent les signaux analogiques, qui représentent les flux, lorsqu'ils empruntent la voie aller. En d'autres termes, ils sont chargés d'adapter le taux de codage du modulateur MO du dispositif D en fonction, notamment, des conditions de transmission. Ce module assure la conformité au standard DVB-S2 pour les volets ACM de la norme. Il agit en fonction des informations de signalisation qui lui sont transmis par le centre de contrôle du réseau.

Le module de traitement numérique MT comporte, ici, un module d'analyse numérique MA, un module de détection numérique MD, un modulateur numérique MO, des moyens de mémorisation numérique MY, des moyens de retardement de premiers flux numériques LR, et un module d'insertion numérique SW.

Le module d'analyse MA est chargé de détecter les caractéristiques de fréquence, de phase, de rythme (ou rythme symbole) et d'amplitude de la porteuse de chaque premier flux entrant numérisé par le premier convertisseur C1. Pour ce faire, il peut par exemple dupliquer les données numériques qui sont délivrées par le premier convertisseur C1. Le module d'analyse MA délivre sur sa sortie des signaux (ou données) représentatifs des caractéristiques de fréquence, de phase, de rythme et d'amplitude qu'il a détectées.

Le module de détection numérique MD est chargé de détecter certains au moins des blocs d'insertion BI qui sont contenus dans les premiers flux entrants numérisés par le premier convertisseur C1. Pour effectuer cette détection, le module de détection MD peut par exemple dupliquer les données numériques qui sont délivrées par le premier convertisseur C1.

Lorsque les premiers flux entrants sont du type de celui illustré sur la figure 3, le module de détection MD est chargé de détecter une partie au moins des symboles connus qui constituent le préambule P2 du paquet qui précède un bloc d'insertion BI et une partie au moins des symboles connus qui constituent le préambule P3 d'un bloc d'insertion BI. Disposant de la cadence fournie par le cadenceur GC, il peut ainsi dater les débuts des préambules P2 et P3 par rapport à l'heure de référence du dispositif D et en déduire l'instant où va débuter le bloc d'insertion BI qui suit le préambule P2 et qui comprend le préambule P3. Dans la forme d'onde DVB-S2, la valeur du préambule participe également à l'identification de la longueur du bloc.

Afin de limiter les fausses alarmes engendrées par la détection de charges utiles localement identiques à un préambule de type P2 ou P3, le module de détection MD peut être également chargé de mesurer la distance temporelle séparant les paquets (ou un multiple de cette distance). Il peut alors comparer chaque distance mesurée à un intervalle seuil et autoriser le module d'insertion SW à effectuer le remplacement d'un bloc d'insertion BI par un paquet modulé, en attente de transmission dans la mémoire MY, lorsque l'intervalle mesuré est sensiblement égal à l'intervalle seuil ou à un multiple entier de ce dernier.

Le module de détection MD délivre sur sa sortie des signaux (ou données) représentatifs des instants estimés des débuts des blocs d'insertion BI contenus dans les premiers flux entrants numérisés, ainsi que d'éventuels signaux (ou données) représentatifs d'une autorisation ou d'une interdiction de remplacement.

Le modulateur MO est couplé à la sortie du démodulateur DM, qui l'alimente en paquets de données à insérer (ou multiplexer), ainsi qu'à la sortie du module d'analyse MA, qui lui fournit les caractéristiques de fréquence, de phase, de rythme et d'amplitude de la porteuse de chaque premier flux entrant numérisé. Il est chargé de moduler les paquets de données qui sont en attente de transmission. Cette modulation s'effectue conformément à la première modulation (ici DVB-S2), compte tenu des caractéristiques de fréquence, de phase, de rythme et d'amplitude détectées par le module de détection MD. Il délivre sur sa sortie des paquets de données modulés, prêts à être insérés.

Les moyens de mémorisation MY sont chargés de stocker les paquets de données modulés qui sont délivrés par le modulateur MO afin qu'ils puissent être insérés lorsqu'un bloc d'insertion BI est détecté par le module de détection MD. Ils sont par exemple réalisés sous la forme d'une mémoire, éventuellement de type FIFO (pour « First In First Out » - premier arrivé, premier sorti).

Les moyens de retardement de premiers flux LR comportent une entrée couplée à la sortie du premier convertisseur C1, afin d'être alimentés en premiers flux entrants numérisés, et une sortie couplée au module d'insertion SW, afin de l'alimenter en premiers flux entrants numérisés et retardés d'une durée choisie. Il fait partie des éléments du dispositif D à contrainte temporelle. Par conséquent, il reçoit la cadence délivrée par le cadenceur GC. Ces moyens de retardement de premiers flux LR se présentent par exemple sous la forme d'une ligne à retard. Ils sont chargés de retarder les premiers flux entrants devant faire l'objet d'une insertion/remplacement pendant une durée permettant au module de détection MD de détecter un bloc d'insertion BI, au module d'analyse MA de détecter les caractéristiques de la porteuse et au modulateur MO de moduler les paquets à transmettre compte tenu des caractéristiques détectées par le module d'analyse MA.

Le module d'insertion SW est chargé de remplacer certains au moins des blocs d'insertion BI, qui ont été détectés par le module de détection MD, par les paquets modulés qui sont stockés dans la mémoire MY, en attente d'insertion. Chaque fois qu'il est autorisé par le module de détection MD à insérer à un instant déterminé des paquets extraits stockés dans un premier flux entrant numérisé délivré par la ligne à retard LR, il extrait de la mémoire MY le ou les paquets de données modulés à transmettre, puis retire du premier flux entrant les données constituant le bloc d'insertion BI détecté afin de les remplacer par le ou les paquets de données modulés extraits. Puis, il délivre sur sa sortie le premier flux entrant numérique ayant fait l'objet de l'insertion afin qu'il soit converti en un premier flux entrant analogique par le second convertisseur C2.

On se réfère maintenant à la figure 5 pour décrire un deuxième exemple de réalisation d'un dispositif D selon l'invention. Il s'agit ici d'un mode de réalisation analogique.

Dans ce mode de réalisation, le dispositif D comprend un module de traitement analogique MT (assurant les fonctions précitées) et des premiers moyens de commutation I1, ainsi qu'éventuellement un module de contrôle MC de type ACM.

Les premiers moyens de commutation I1 sont par exemple réalisés sous la forme d'un interrupteur de type 1 x1 comprenant une entrée couplée au démodulateur DM afin d'être alimenté en paquets en attente de transmission, une sortie et une entrée de contrôle pour contrôler le couplage de l'entrée à la sortie en fonction d'instructions fournies par le module de détection MD du module de traitement MT. Lorsque l'interrupteur I1 est fermé, les paquets à transmettre peuvent passer du démodulateur DM vers le modulateur MO du module de traitement MT. En revanche, lorsque l'interrupteur I1 est ouvert, les paquets à transmettre restent au sein du démodulateur DM.

Le module de traitement analogique MT comporte, ici, un module d'analyse analogique MA, un module de détection analogique MD, des secondes moyens de commutation I2, un modulateur analogique MO, des moyens de retardement de premiers flux analogiques LR, et un module d'insertion analogique SW.

Hormis le fait qu'ils soient de type analogique, les module d'analyse analogique MA, module de détection analogique MD, modulateur analogique MO, et moyens de retardement de premiers flux analogiques LR assurent des fonctions similaires à celles des mêmes éléments numériques, décrits ci-avant.

Cependant, en raison du caractère analogique des signaux constituants les premiers flux entrants et des paquets à insérer, le fonctionnement du dispositif D diffère de celui du précédent dispositif.

Le module d'analyse MA est chargé de détecter les caractéristiques de fréquence, de phase, de rythme (ou rythme symbole), et d'amplitude de la porteuse de chaque premier flux entrant analogique. Pour ce faire, il peut par exemple prélever une partie du signal analogique représentant les premiers flux, entrants à traiter. Le module d'analyse MA délivre sur sa sortie des premiers signaux analogiques représentatifs des caractéristiques de fréquence, de phase, de rythme et d'amplitude qu'il a détectées.

Les seconds moyens de commutation I2 sont par exemple réalisés sous la forme d'un interrupteur de type 1x1 comprenant une entrée couplée au module d'analyse MA afin d'être alimenté en premiers signaux analogiques représentatifs des caractéristiques de fréquence, de phase, de rythme et d'amplitude qu'il a détectées, une sortie couplée au modulateur MO et une entrée de contrôle pour contrôler le couplage de l'entrée à la sortie en fonction d'instructions fournies par le module de détection MD. Lorsque l'interrupteur 12 est fermé, les premiers signaux analogiques peuvent passer du module d'analyse MA vers le modulateur MO. En revanche, lorsque l'interrupteur I2 est ouvert, les premiers signaux restent au sein du module d'analyse MA.

Le module de détection numérique MD est chargé de détecter certains au moins des blocs d'insertion BI qui sont contenus dans les premiers flux entrants analogiques. Pour effectuer cette détection, le module de détection MD peut par exemple prélever une partie du signal analogique représentant les premiers flux entrants à traiter.

Lorsque les premiers flux entrants sont du type de celui illustré sur la figure 3, le module de détection MD est chargé de détecter une partie au moins des symboles connus qui constituent les préambules P2, qui font partie des paquets précédant les blocs d'insertion BI, et les préambules P3 qui font partie des blocs d'insertion BI. Ils disposent en effet d'une empreinte analogique connue. Lorsqu'un préambule P2 est détecté à un instant repéré par rapport à l'heure de référence du dispositif D, le module de détection MD en déduit l'instant où va débuter le bloc d'insertion BI qui suit ce préambule P2 et qui comprend le préambule P3.

De nouveau, un mécanisme de limitation d'erreurs de détection de préambule peut être mis en oeuvre par le module de détection MD.

Le module de détection MD délivre sur sa sortie des seconds signaux représentatifs des instants estimés des débuts des blocs d'insertion BI contenus dans les premiers flux entrants analogiques, des signaux de contrôle servant d'instructions pour les premier I1 et second I2 interrupteurs, ainsi que d'éventuels signaux (ou données) représentatifs d'une autorisation ou d'une interdiction de remplacement de bloc d'insertion BI.

Le modulateur MO est couplé à la sortie du premier interrupteur I1, qui ne peut donc l'alimenter en paquets de données à insérer (ou multiplexer) que lorsque le module de détection MD l'a placé dans un état fermé correspondant à la détection d'un bloc d'insertion BI, ainsi qu'à la sortie du second interrupteur 12, qui ne peut donc l'alimenter en premiers signaux (représentatifs des caractéristiques de fréquence, de phase, de rythme et d'amplitude de la porteuse de chaque premier flux entrant analogique) que lorsque le module de détection MD l'a placé dans un état fermé correspondant à la détection d'un bloc d'insertion BI.

Il est chargé de moduler les paquets de données qui lui parviennent, conformément à la première modulation (ici DVB-S2), compte tenu des caractéristiques de fréquence, de phase, de rythme et d'amplitude détectées. Il délivre sur sa sortie des paquets de données modulés, prêts à être insérés.

Les moyens de retardement de premiers flux LR comportent une entrée alimentée en premiers flux entrants analogiques, et une sortie couplée au module d'insertion SW afin de l'alimenter en premiers flux entrants analogiques et retardés d'une durée choisie. Ces moyens de retardement de premiers flux LR se présentent par exemple sous la forme d'une ligne à retard. Ils sont chargés de retarder les premiers flux entrants devant faire l'objet d'une insertion/remplacement pendant une durée permettant au module de détection MD de détecter un bloc d'insertion BI, au module d'analyse MA de détecter les caractéristiques de la porteuse et au modulateur MO de moduler les paquets à transmettre compte tenu des caractéristiques détectées par le module d'analyse MA.

Le module d'insertion SW est chargé de remplacer certains au moins des blocs d'insertion BI, qui ont été détectés par le module de détection MD, par les paquets modulés qui sont délivrés par le modulateur MO.

Chaque fois que le module de détection MD autorise une insertion à un instant déterminé, les premier I1 et second I2 interrupteurs sont placés dans leur état fermé permettant ainsi au modulateur de moduler un ou des paquets à insérer à l'instant déterminé. Lorsque le ou les paquets ont été modulés, le module d'insertion SW le(s) collecte, puis il retire du premier flux entrant analogique (délivré par la ligne à retard LR) la portion de signal constituant le bloc d'insertion BI détecté afin de la remplacer par le ou les paquets modulé(s) collecté(s). Puis, il délivre sur sa sortie le premier flux entrant analogique ayant fait l'objet de l'insertion.

On se réfère maintenant aux figures 6 et 7 pour décrire un troisième exemple de réalisation d'un dispositif D selon l'invention. Il s'agit ici d'un autre mode de réalisation numérique.

Ce mode de réalisation est adapté aux situations dans lesquelles le satellite SA dispose d'au moins deux canaux de réception et d'émission, comme dans l'exemple illustré sur la figure 6, et d'au moins un dispositif D chargé de traiter les premiers flux entrants issus de ces canaux et devant faire l'objet d'une éventuelle insertion. En fait, lorsque le satellite SA dispose de plusieurs canaux de réception et d'émission, il comprend un nombre de dispositifs D inférieur au nombre de canaux. Dans l'exemple illustré sur la figure 6 et décrit ci-après, le satellite SA comprend deux canaux et un seul dispositif D.

Dans l'exemple illustré sur la figure 6, la carte de traitement (ou récepteur) CT comporte une partie RR dédiée à la réception des premiers flux entrants transmis, par exemple, sur la voie aller dans deux canaux différents.

Cette partie RR comprend deux voies de réception comportant chacune, à titre d'exemple illustratif et non limitatif :
- un module de réception de signaux MRj (MR1 ou MR2, ici j =1 ou 2),
- un premier module de conversion de fréquence CF1j (CF11 ou CF12), par exemple chargé de convertir la fréquence des signaux reçus de 30 GHz à 20 GHz (RF),
- un filtre passe-bande Fj (F1 ou F2), par exemple chargé de filtrer les signaux ayant fait l'objet de la première conversion de fréquence dans une bande d'environ 100 MHz,
- un deuxième module de conversion de fréquence CF2j (CF21 ou CF22), par exemple chargé de convertir la fréquence des signaux filtrés de 20 GHz (RF) à une fréquence dite intermédiaire (ou FI, correspondant à la bande L, par exemple), et
- des moyens de couplage CPj (CP1 ou CP2), comportant une entrée couplée à la sortie du deuxième module de conversion de fréquence CF2j, une première sortie couplée à une première entrée d'un module de sélection MS, sur lequel on reviendra plus loin, et une seconde sortie. La première sortie permet d'aiguiller directement les premiers flux entrants analogiques, délivrés par la voie de réception, en aval du dispositif D sans qu'ils aient fait l'objet d'une insertion. La seconde sortie permet d'aiguiller les premiers flux entrants analogiques, délivrés par la voie de réception, vers le dispositif D afin qu'ils fassent l'objet d'une insertion. Ils sont par exemple réalisés sous la forme de coupleurs radiofréquence (RF) coaxiaux.

Bien entendu, le nombre de modules de conversion de fréquence peut être différent de celui présenté ci-avant.

Comme cela est illustré sur la figure 6, on peut éventuellement intercaler entre les secondes sorties des moyens de couplage CPj et le dispositif D un troisième modulé de conversion de fréquence CF3. Cela permet d'effectuer une troisième conversion de fréquence de type FI→BB sur les signaux analogiques délivrés par les voies de réception, afin qu'ils présentent une fréquence en bande de base (ou « baseband » BB, correspondant par exemple à 200 MHz).

Le dispositif D peut ainsi être alimenté en signaux en bande de base représentatifs des premiers flux entrants reçus sur chacun des canaux (ici au nombre de deux à titre d'exemple non limitatif).

Ce dispositif D, qui sera décrit plus loin, comprend une sortie délivrant des premiers flux entrants numériques ayant fait l'objet d'insertions/remplacements qui peuvent faire l'objet d'une conversion de fréquence, par exemple de type BB→FI au moyen d'un quatrième module de conversion CF4. Ce dernier alimente la seconde entrée d'un module de sélection MS comportant autant de moyens d'aiguillage de type 2x1 qu'il y a de voies de réception. Dans l'exemple illustré, le module de sélection MS comporte deux moyens d'aiguillage latéraux SWj (SW1 et SW2) et un moyen d'aiguillage central SW3. L'aiguilleur central SW3 comporte une entrée couplée à la sortie du quatrième convertisseur de fréquence CF4 et autant de sorties qu'il y a de voies de réception (ici deux). Chaque moyen d'aiguillage latéral SWj comprend une première entrée couplée à la première sortie d'un moyen de couplage CPj, une seconde entrée couplée à l'une des sorties de l'aiguilleur central SW3, et une sortie alimentant par exemple un cinquième convertisseur de fréquence CF5j. Ce dernier est par exemple chargé de convertir la fréquence de premiers flux entrants, à retransmettre (après insertion ou sans insertion) sur l'un des canaux, de la fréquence intermédiaire FI vers la fréquence de 20 GHz (RF) avant qu'ils ne parviennent au niveau d'un amplificateur de puissance chargé de régler le gain de la chaîne.

Dans ce troisième mode de réalisation numérique, le module de traitement MT comprend tout d'abord autant de voies de traitement qu'il y a de voies de réception associées à des canaux différents traités par son dispositif D (avant commutation). Par conséquent, dans cet exemple il y a deux voies de traitement comportant chacune :
- un premier convertisseur C1j (C11 ou C12), chargé de convertir en signaux numériques les premiers flux entrants analogiques qui proviennent, ici, du troisième convertisseur de fréquence CF4 (en provenance de l'une des voies de réception),
- un module d'analyse numérique MAj, du type de celui décrit précédemment en référence à la figure 1. Ce module d'analyse numérique MAj est, comme le précédent, chargé de détecter les caractéristiques de fréquence, de phase, de rythme et d'amplitude des porteuses des premiers flux entrants délivrés par le premier convertisseur C1j, et de délivrer des premiers signaux représentatifs des caractéristiques détectées. Le nombre de paquets, d'un premier flux entrant, nécessaire à la détection des caractéristiques de la porteuse de ce premier flux entrant, dépend de la forme d'onde et, dans une moindre mesure, du rapport signal sur bruit. Typiquement, il faut entre 10 et 100 paquets pour détecter les caractéristiques d'une porteuse, et
- un module de détection numérique MDj, du type de celui décrit précédemment en référence à la figure 1. Ce module de détection numérique MDj est, comme le précédent, chargé, en présence de premiers flux entrants comprenant des blocs d'insertion BI précédés de préambules P2 et P3 définis par des symboles choisis, de détecter une partie au moins des symboles qui définissent ces préambules P2 et P3, et de délivrer des deuxièmes signaux représentatifs des positions temporelles de certains au moins de ces blocs d'insertion BI détectés.

Dans ce troisième mode de réalisation l'analyse et la détection se font par exemple par duplication des flux délivrés par le premier convertisseur C1j.

Le module de traitement MT comprend également un module de contrôle MCT, un modulateur MO et un second convertisseur C2.

Le module de contrôle MCT est couplé aux sorties des modules d'analyse MAj et des modules de détection MDj, afin d'être alimenté en premiers et deuxièmes signaux, c'est-à-dire en caractéristiques de fréquence, de phase, de rythme et d'amplitude des porteuses des premiers flux entrants provenant de chacune des voies de traitement et en informations temporelles relatives aux instants de début des blocs d'insertion BI. Il comprend également une entrée de commande recevant des troisièmes signaux de signalisation SI transmis par la passerelle PA sur un canal de signalisation et contenant des informations relatives à la constitution des premiers flux entrants, et notamment aux positions temporelles des préambules P1 à P3 qu'ils contiennent, ainsi qu'aux premiers flux entrants devant faire l'objet d'insertions/remplacements.

Grâce à ces troisièmes signaux de signalisation SI, le module de contrôle MCT peut tout d'abord sélectionner chaque premier flux entrant devant faire l'objet d'une insertion.

Grâce aux troisièmes signaux de signalisation SI, le module de contrôle MCT peut également adresser aux modules de détection MDj des informations de signalisation définissant des fenêtres temporelles à l'intérieur desquelles sont censés se trouver les symboles connus des préambules P2 et/ou P3 à détecter au sein des premiers flux entrants numérisés qui les concernent respectivement C'est alors pendant ces fenêtres temporelles que les modules de détection MDj effectuent leurs détections (ou acquisitions) de manière à déterminer la position temporelle, par rapport à l'horloge interne du dispositif D, de chaque bloc d'insertion BI devant être remplacé.

Toujours grâce aux troisièmes signaux de signalisation SI, le module de traitement MT peut insérer des paquets à transmettre dans des premiers flux entrants sans introduire de retard. En effet, le dispositif d'insertion prédit la position des blocs d'insertion à l'aide de la signalisation reçue, qui fournit l'intervalle d'insertion et la position des préambules et par conséquent la position précise des blocs d'insertion BI à la fraction de symbole près. Il est donc capable de remplacer dans la porteuse qui transporte le flux entrant les blocs d'insertion BI par des paquets de données sans introduire de retard et sans perturber les caractéristiques de fréquence, de phase, de rythme et d'amplitude de cette porteuse.

Enfin, le module de contrôle MCT peut délivrer sur une première sortie chaque premier flux entrant qu'il a sélectionné, avec les deuxièmes signaux représentatifs des positions temporelles des blocs d'insertion BI à remplacer (fournis par les modules de détection MDj).

Comme cela est illustré, le module de contrôle MCT délivre également sur une deuxième sortie les premiers signaux représentatifs des caractéristiques de fréquence, de phase, de rythme et d'amplitude de la porteuse du premier flux entrant qu'il a sélectionné.

Il comprend enfin une troisième sortie couplée au module de sélection MS et chargée de contrôler les états respectifs de ses moyens d'aiguillage latéraux SWj et central SW3 compte tenu des informations de signalisation SI reçues.

Les première et deuxième sorties du module de contrôle MCT sont couplées à un modulateur numérique MO. Ce dernier est chargé de moduler les paquets de données en attente de transmission, qui lui sont communiqués par le démodulateur DM de la carte de traitement MT. Cette modulation s'effectue conformément à la première modulation (ici de type DVB-S2), compte tenu des premiers signaux délivrés par les modules de détection MDj des voies de traitement, et pendant les instants (positions temporelles) définis par les deuxièmes signaux.

Une fois que le modulateur numérique MO a modulé des paquets de données, il procède au remplacement des données, qui constituent le bloc d'insertion BI désigné temporellement par les deuxièmes signaux délivrés par le module de contrôle MCT, par ces paquets modulés. Puis, il délivre le premier flux entrant numérique ayant fait l'objet de l'insertion/remplacement sur une sortie.

Le second convertisseur C2 du module de traitement MT est alors chargé de convertir en signaux analogiques le premier flux entrant délivré par la sortie du modulateur MO. Comme indiqué précédemment, la sortie du second convertisseur C2 alimente en premier flux entrant numérisé, à paquets modulés insérés, un quatrième convertisseur de fréquence CF4 (BB→IF), par exemple, qui lui-même alimente le module de sélection MS chargé d'aiguiller les flux vers les amplificateurs de puissance de la chaîne associés aux différents canaux de transmission, en fonction des instructions fournies par le module de contrôle MCT.

Il est important de noter que la carte de traitement CT ou (récepteur) peut comporter un module de commutation (non représenté), placé en amont de ses voies de réception (MRj, CF1j, Fj, CF2j) et comprenant, d'une part, au moins deux entrées pouvant recevoir des premiers flux entrants provenant de passerelles de communication satellitaire SA différentes (et donc présentant des porteuses différentes), et d'autre part, au moins une sortie pouvant être couplée à au moins une voie de réception afln de l'alimenter sélectivement en premiers flux entrants d'origines différentes. De la sorte, on peut utiliser, un même dispositif D pour insérer des paquets à transmettre dans des premiers flux entrants dont les porteuses sont différentes.

Le dispositif de traitement de flux D selon l'invention, et notamment son module de traitement MT, peut ètre réalisé sous la forme de circuits électroniques, de modules logiciels (ou informatiques), ou d'une combinaison de circuits et de logiciels.

L'invention ne se limite pas aux modes de réalisation de dispositif de traitement de flux, de récepteur de flux, de carte de traitement, de satellite de communication et de passerelle de communication satellitaire décrits ci-avant, seulement à titre d'exemple, mais elle englobe toutes les variantes que pourra envisager l'homme de l'art dans le cadre des revendications ci-après.

Ainsi, dans ce qui précède on a décrit des exemples dans lesquels les premiers flux entrants provenaient d'une passerelle de communication satellitaire et les seconds flux entrants provenaient de terminaux de communication. Mais, les premiers flux entrants pourraient provenir d'un autre satellite de communication ou de terminaux, et les seconds flux entrants pourraient provenir d'un autre satellite de communication ou d'une passerelle de communication satellitaire.

## Revendications

1. Dispositif de traitement de flux de données (D) pour un satellite de communication (SA) d'un réseau de communication, **caractérisé en ce qu'**il comprend des moyens de traitement (MT) agencés, en cas de réception d'un premier flux de données entrant dont la porteuse présente une première modulation et comportant en des emplacements choisis des blocs d'insertion (BI) choisis :
- pour détecter lesdits blocs d'insertion (BI) et au moins une caractéristique de la porteuse dudit premier flux entrant, choisie parmi une amplitude, une fréquence, une phase et un rythme ;
- pour moduler, conformément à ladite première modulation et compte tenu de chaque caractéristique détectée, des paquets de données à transmettre vers une destination commune avec celle du premier flux entrant, et ;
- pour remplacer par lesdits paquets modulés certains au moins desdits blocs d'insertion (BI) détectés dans ledit premier flux entrant non démodulé, le remplacement étant effectué par des symboles cohérents avec les symboles du reste de la porteuse étant donné que la partie du dit premier flux entrant remplacée reproduit ladite caractéristique de la porteuse dudit premier flux, afin que ce dernier soit transmis avec ladite première modulation par ledit satellite (SA) vers ladite destination commune.

2. Dispositif selon la revendication 1, **caractérisé en ce que** lesdits moyens de traitement (MT) sont agencés pour détecter les caractéristiques d'amplitude, de fréquence, de phase et de rythme des porteuses des premiers flux entrants reçus.

3. Dispositif selon l'une des revendications 1 et 2, **caractérisé en ce que** lesdits moyens de traitement (MT) comportent des moyens d'analyse (MA) agencés pour détecter chaque caractéristique des porteuses des premiers flux entrants reçus, des moyens de modulation (MO) agencés pour moduler lesdits paquets à transmettre, conformément à ladite première modulation et compte tenu de chaque caractéristique détectée par lesdits moyens d'analyse (MA), et des moyens d'insertion (SW) agencés pour remplacer certains au moins desdits blocs d'insertion détectés (BI) par lesdits paquets modulés par lesdits moyens de modulation (MO), en vue de la transmission dudit premier flux entrant.

4. Dispositif selon l'une des revendications 1 à 3, **caractérisé en ce que** lesdits moyens de traitement (MT) comportent des moyens de détection (MD) agencés, en présence d'un premier flux entrant comprenant des blocs d'insertion (BI) incluant des préambules définis par des symboles choisis, pour détecter une partie au moins desdits symboles définissant lesdits préambules.

5. Dispositif selon la revendication 4, **caractérisé en ce que** lesdits moyens de détection (MD) sont agencés pour mesurer l'intervalle de temps entre des détections de préambules successifs, et pour comparer chaque intervalle mesuré à un intervalle seuil, de manière à n'autoriser le remplacement d'un bloc d'insertion (BI) par un paquet modulé à transmettre que lorsqu'un intervalle mesuré est sensiblement égal audit intervalle seuil ou à un multiple entier de ce dernier.

6. Dispositif selon l'une des revendications 3 à 5, **caractérisé en ce qu'**il comprend i) des premiers moyens de conversion (C1) placés en amont desdits moyens d'analyse (MA) et/ou desdits moyens de détection (MD) et agencés pour convertir en signaux numériques des premiers flux entrants se présentant sous une forme analogique, ii) des seconds moyens de conversion (C2) placés en aval desdits moyens d'insertion (SW) et agencés pour convertir en signaux analogiques les premiers flux entrants se présentant sous une forme numérique, et iii) des moyens de mémorisation (MY) couplés auxdits moyens de modulation (MO) et auxdits moyens d'insertion (SW) et agencés pour stocker lesdits paquets modulés à transmettre.

7. Dispositif selon la revendication 6, **caractérisé en ce qu'**il comprend des moyens de cadencement (GC) agencés pour définir une cadence choisie de fonctionnement pour lesdits moyens de traitement (MT) et lesdits premiers (C1) et seconds (C2) moyens de conversion.

8. Dispositif selon l'une des revendications 6 et 7, **caractérisé en ce que** lesdits moyens de détection (MD) sont agencés pour dupliquer lesdits premiers flux entrants de manière à détecter les emplacements desdits blocs d'insertion (BI) qu'ils contiennent, et **en ce que** lesdits moyens d'analyse (MA) sont agencés pour dupliquer lesdits premiers flux entrants de manière à détecter chaque caractéristique des porteuses.

9. Dispositif selon l'une des revendications 3 à 5, **caractérisé en ce que** lesdits moyens d'analyse (MA) sont agencés pour prélever une partie desdits premiers flux entrants de manière à détecter chaque caractéristique des porteuses, et pour délivrer sur une sortie des signaux représentatifs de chaque caractéristique détectée des porteuses, **en ce qu'**il comprend des premiers moyens de commutation (11) comprenant une entrée propre à recevoir des paquets à transmettre, une entrée de contrôle et une sortie propre à alimenter lesdits moyens de modulation (MO) avec lesdits paquets à transmettre en cas de placement dans un état fermé, **en ce que** lesdits moyens de traitement (MT) comprennent des seconds moyens de commutation (I2) comportant une entrée couplée à la sortie desdits moyens d'analyse (MA) pour recevoir des signaux représentatifs de chaque caractéristique détectée des porteuses, une entrée de contrôle et une sortie propre à alimenter lesdits moyens de modulation (MO) avec lesdits signaux représentatifs de chaque caractéristique détectée des porteuses en cas de placement dans un état fermé, **en ce que** lesdits moyens d'insertion (SW) sont agencés sous la forme d'un commutateur comportant une première entrée couplée à la sortie desdits moyens de modulation (MO), une deuxième entrée recevant lesdits premiers flux entrants, une troisième entrée de contrôle et une sortie propre à être couplée à la première ou à la deuxième entrée en cas de placement dans un premier ou un second état de manière à délivrer lesdits paquets modulés à transmettre ou lesdits premiers flux entrants à transmettre, et **en ce que** lesdits moyens de détection (MD) sont agencés pour prélever une partie des premiers flux entrants de manière à détecter les emplacements des blocs d'insertion (BI) qu'ils contiennent et délivrer, d'une part, auxdits premiers (I1) et seconds (I2) moyens de commutation des signaux de contrôle pour les placer dans un état fermé en cas de détection d'un bloc d'insertion (BI), et d'autre part, auxdits moyens d'insertion (SW) des signaux de contrôle pour les placer dans ledit premier ou second état en cas de détection ou d'absence de détection d'un bloc d'insertion (BI).

10. Dispositif selon l'une des revendications 3 à 9, **caractérisé en ce que** lesdits moyens de traitement (MT) comportent des moyens de retardement (LR), implantés en aval desdits moyens de détection (MD) et/ou desdits moyens d'analyse (MA) et en amont desdits moyens d'insertion (SW), et agencés pour retarder un premier flux entrant de manière à permettre la détection des emplacements de ses blocs d'insertion (BI).

11. Dispositif selon l'une des revendications 1 et 2, **caractérisé en ce qu'**il comprend :
- au moins deux voies de traitement propres à recevoir chacune des premiers flux entrants provenant d'au moins deux canaux différents et comportant chacune i) des premiers moyens de conversion (C1j) agencés pour convertir en signaux numériques des premiers flux entrants se présentant sous une forme analogique, ii) des moyens d'analyse (MAj) agencés pour détecter chaque caractéristique des porteuses des premiers flux entrants délivrés par lesdits premiers moyens de conversion (C1j) et pour délivrer des premiers signaux représentatifs de chaque caractéristique détectée, et iii) des moyens de détection (MDj) agencés, en présence d'un premier flux entrant comprenant des blocs d'insertion (BI) incluant des préambules définis par des symboles choisis, pour détecter une partie au moins desdits symboles définissant lesdits préambules à l'intérieur de fenêtres temporelles définies par des informations de signalisation et délivrer des deuxièmes signaux représentatifs des positions temporelles de certains au moins desdits blocs d'insertion (BI),
- des moyens de contrôle (MCT) agencés i) pour sélectionner le premier flux de l'une desdites voies de traitement en fonction de troisièmes signaux de signalisation, ii) pour définir des informations de signalisation représentatives de fenêtres temporelles de détection à partir desdits troisièmes signaux de signalisation et pour communiquer ces informations de signalisation aux moyens de détection (MDj) concernés, et iii) pour délivrer le premier flux entrant sélectionné accompagné des deuxièmes signaux représentatifs desdites positions temporelles des blocs d'insertion (BI) à remplacer,
- des moyens de modulation (MO) agencés pour moduler lesdits paquets à transmettre, conformément à ladite première modulation et compte tenu desdits premier signaux délivrés par lesdites voies de traitement, et pour remplacer par lesdits paquets modulés, aux instants définis par lesdits deuxièmes signaux, certains au moins desdits blocs d'insertion (BI) détectés et contenus dans ledit premier flux entrant, afin de délivrer un premier flux entrant à paquets insérés, et
- des seconds moyens de conversion (C2) agencés pour convertir en signaux analogiques le premier flux entrant à paquets insérés se présentant sous une forme numérique, délivrés par lesdits moyens de modulation (MO).

12. Dispositif selon l'une des revendications 1 à 11, **caractérisé en ce que** lesdits blocs d'insertion (BI) ont une dimension au moins égale à celle d'un paquet contenu dans un flux.

13. Dispositif selon la revendication 12, **caractérisé en ce que** lesdits moyens de traitement (MT) sont agencés, en présence d'un premier flux entrant comportant des groupes de premier et second blocs d'insertion consécutifs, pour remplacer certains au moins des seconds blocs d'insertion par des paquets modulés à transmettre.

14. Dispositif selon l'une des revendications 1 à 13, **caractérisé en ce que** les dimensions des blocs d'insertion (BI) varient d'un premier flux entrant à un autre.

15. Dispositif selon l'une des revendications 1 à 14, **caractérisé en ce que** lesdits moyens de traitement (MT) sont agencés pour traiter des premiers flux entrants ayant subi au moins un changement de fréquence.

16. Dispositif selon l'une des revendications 1 à 15, **caractérisé en ce que** lesdits moyens de traitement (MT) sont agencés pour traiter des premiers flux entrants transmis par un équipement de communication dudit réseau choisi dans un groupe comprenant des passerelles de communication satellitaire (PA), des terminaux de communication (Ti), et des satellites de communication (SA).

17. Dispositif selon l'une des revendications 11 à 16, **caractérisé en ce que** lesdits moyens de traitement (MT) sont agencés pour utiliser lesdits troisièmes signaux de signalisation de manière à insérer des paquets à transmettre dans des premiers flux entrants sans introduire de retard.

18. Récepteur de flux de données (CT) pour un satellite de communication (SA) d'un réseau de communication, **caractérisé en ce qu'**il comprend au moins une voie de réception (MRj, CF1j, Fj, CF2j, CPj) propre à recevoir des premiers flux entrants sous forme analogique, associés à un canal, et au moins un dispositif de traitement de flux (D) selon l'une des revendications précédentes, couplé à au moins une voie de réception.

19. Récepteur selon la revendication 18, **caractérisé en ce qu'**il comprend plusieurs voies de réception (MRj, CF1j, Fj, CF2j) couplées à un nombre de dispositifs de traitement de flux (D) inférieur au nombre de voies de réception.

20. Récepteur selon la revendication 19, **caractérisé en ce que** lesdites voies de réception (MRj, CF1j, Fj, CF2j) sont chacune couplées audit dispositif de traitement de flux (D) par l'intermédiaire d'au moins des moyens de couplage (CPj) comportant une entrée, une première sortie, et une seconde sortie couplée audit dispositif (D), et **en ce qu'**il comprend des moyens de sélection (MS), comprenant une entrée propre à être alimentée en premiers flux entrants délivrés par ledit dispositif de traitement de flux (D) et des entrées couplées aux premières sorties respectives desdits moyens de couplage (CPj), et des sorties en nombre égal au nombre de voies de réception, et agencés pour délivrer sur l'une desdites sorties les premiers flux entrants parvenus sur l'une desdites entrées en fonction de signaux de signalisation.

21. Récepteur selon l'une des revendications 18 à 20, **caractérisé en ce qu'**il comprend des moyens de démodulation agencés pour démoduler des seconds flux entrants modulés pour délivrer des paquets de données démodulés propres à être insérés dans des premiers flux entrants.

22. Récepteur selon l'une des revendications 19 à 21, **caractérisé en ce qu'**il comprend des moyens de commutation comprenant au moins deux entrées, propres à recevoir des premiers flux entrants provenant de passerelles de communication satellitaire (PA) différentes, et au moins une sortie propre à alimenter sélectivement en premiers flux entrants des voies de réception (MRj, CF1j, Fj, CF2j) couplées à un dispositif de traitement de flux (D).

23. Satellite de communication (SA) pour un réseau de communication, **caractérisé en ce qu'**il comprend au moins un dispositif de traitement de flux de données (D) selon l'une des revendications 1 à 17.

24. Satellite de communication (SA) pour un réseau de communication, **caractérisé en ce qu'**il comprend au moins un récepteur (CT) selon l'une des revendications 18 à 22.

25. Passerelle de communication satellitaire (PA), pour un réseau de communication comportant au moins un satellite de communication (SA) selon l'une des revendications 23 et 24, **caractérisée en ce qu'**elle est agencée pour générer à destination dudit satellite (SA) des premiers flux entrants dont la porteuse présente une première modulation et comportant en des emplacements choisis des blocs d'insertion (BI).

## Patentansprüche

1. Datenstromverarbeitungsvorrichtung (D) für einen Kommunikationssatelliten (SA) in einem Kommunikationsnetz, **dadurch gekennzeichnet, dass** sie Verarbeitungsmittel (MT) umfasst, die im Falle des Empfangs eines ersten eingehenden Datenstroms, dessen Träger eine erste Modulation aufweist und an gewählten Stellen gewählte Einfügungsblöcke (BI) umfasst, ausgelegt sind zum:
- Erkennen der Einfügungsblöcke (BI) und wenigstens eines Kennwertes des Trägers des ersten eingehenden Stroms, ausgewählt aus Amplitude, Frequenz, Phase und Takt;
- Modulieren, gemäß der ersten Modulation und unter Berücksichtigung jedes erkannten Kennwertes, von Datenpaketen, die zu einem mit dem ersten eingehenden Strom gemeinsamen Ziel übertragen werden sollen; und
- Ersetzen von wenigstens einigen der im ersten nichtmodulierten eingehenden Strom erkannten Einfügungsblöcke (BI) durch die modulierten Pakete, wobei der Austausch durch mit den Symbolen des Rests des Trägers zusammenhängende Symbole erfolgt, aufgrund der Tatsache, dass der ersetzte Teil des ersten eingehenden Stroms den Kennwert des Trägers des ersten Stroms wiedergibt, damit dieser mit der ersten Modulation vom Satelliten (SA) zu dem gemeinsamen Ziel übertragen wird.

2. Vorrichtung nach Anspruch 1, **dadurch gekennzeichnet, dass** die Verarbeitungsmittel (MT) zum Erkennen der Amplituden-, Frequenz-, Phasen- und Taktkennwerte der Träger der ersten empfangenen eingehenden Ströme ausgelegt sind.

3. Vorrichtung nach den Ansprüchen 1 und 2, **dadurch gekennzeichnet, dass** die Verarbeitungsmittel (MT) Analysemittel (MA) zum Erkennen jedes Kennwertes der Träger der ersten empfangenen eingehenden Ströme, Modulationsmittel (MO) zum Modulieren der zu übertragenden Pakete gemäß der ersten Modulation und unter Berücksichtigung jedes von den Analysemitteln (MA) erkannten Kennwerts, und Einfügungsmittel (SW) zum Ersetzen von wenigstens einigen der erkannten Einfügungsblöcke (BI) durch die vom Modulationsmittel (MO) modulierten Pakete im Hinblick auf eine Übertragung des ersten eingehenden Stroms umfassen.

4. Vorrichtung nach einem der Ansprüche 1 bis 3, **dadurch gekennzeichnet, dass** die Verarbeitungsmittel (MT) Erkennungsmittel (MD) umfassen, die so ausgelegt sind, dass sie in Anwesenheit eines ersten eingehenden Stroms, der Einfügungsblöcke (BI) enthält, die Präambeln beinhalten, die durch die gewählten Symbole definiert werden, wenigstens einen Teil der Symbole erkennen, die die Präambeln definieren.

5. Vorrichtung nach Anspruch 4, **dadurch gekennzeichnet, dass** die Erkennungsmittel (MD) so ausgelegt sind, dass sie das Zeitintervall zwischen Erkennungen von aufeinander folgenden Präambeln messen und jedes gemessene Intervall mit einem Schwellenintervall vergleichen, um das Ersetzen eines Einfügungsblocks (BI) durch ein zu übertragendes moduliertes Paket nur dann zu autorisieren, wenn ein gemessenes Intervall im Wesentlichen gleich dem Schwellenintervall oder einem ganzzahligen Vielfachen davon ist.

6. Vorrichtung nach einem der Ansprüche 3 bis 5, **dadurch gekennzeichnet, dass** sie Folgendes umfasst: i) erste Konvertierungsmittel (C1), die sich stromaufwärts von den Analysemitteln (MA) und/oder den Erkennungsmitteln (MD) befinden und so ausgelegt sind, dass sie die ersten in analoger Form vorliegenden eingehenden Ströme in digitale Signale konvertieren, ii) zweite Konvertierungsmittel (C2), die sich stromabwärts von den Einfügungsmitteln (SW) befinden und so ausgelegt sind, dass sie die in digitaler Form vorliegenden ersten eingehenden Ströme in analoge Signale konvertieren, und iii) Speichermittel (MY), die mit den Modulationsmitteln (MO) und den Einfügungsmitteln (SW) gekoppelt und so ausgelegt sind, dass sie die zu übertragenden modulierten Pakete speichern.

7. Vorrichtung nach Anspruch 6, **dadurch gekennzeichnet, dass** sie Taktgabemittel (GC) zum Definieren eines gewählten Betriebstakts für die Verarbeitungsmittel (MT) sowie das erste (C1) und zweite (C2) Konvertierungsmittel umfasst.

8. Vorrichtung nach den Ansprüchen 6 und 7, **dadurch gekennzeichnet, dass** die Erkennungsmittel (MD) zum Duplizieren der ersten eingehenden Ströme ausgelegt sind, um die Orte der in ihnen enthaltenen Einfügungsblöcke (BI) zu erkennen, und dadurch, dass die Analysemittel (MA) zum Duplizieren der ersten eingehenden Ströme ausgelegt sind, um jeden Kennwert der Träger zu erkennen.

9. Vorrichtung nach einem der Ansprüche 3 bis 5, **dadurch gekennzeichnet, dass** die Analysemittel (MA) so ausgelegt sind, dass sie einen Teil der ersten eingehenden Ströme abtasten, um jeden Kennwert der Träger zu erkennen und um an einen Ausgang Signale anzulegen, die für jeden erkannten Kennwert der Träger repräsentativ sind, dadurch, dass sie erste Schaltmittel (11) mit einem zum Empfangen von zu übertragenden Paketen ausgelegten Eingang, einem Steuereingang und einem Ausgang zum Versorgen der Modulationsmittel (MO) mit den zu übertragenden Paketen bei einer Platzierung in einem geschlossenen Zustand umfasst, dadurch, dass die Verarbeitungsmittel (MT) zweite Schaltmittel (12) mit einem mit dem Ausgang der Analysemittel (MA) gekoppelten Eingang zum Empfangen von Signalen, die für jeden erkannten Kennwert der Träger repräsentativ sind, einem Steuereingang und einem Ausgang umfassen, der so ausgelegt ist, dass er die Modulationsmittel (MO) mit den Signalen versorgt, die für jeden erkannten Kennwert der Träger repräsentativ sind, bei einer Platzierung in einem geschlossenen Zustand, dadurch, dass die Einfügungsmittel (SW) in Form eines Schalters mit einem mit dem Ausgang der Modulationsmittel (MO) gekoppelten ersten Eingang, einem zweiten Eingang zum Empfangen der ersten eingehenden Ströme, einem dritten Steuereingang und einem Ausgang ausgelegt sind, der so ausgelegt ist, dass er je nach Platzierung in einem ersten oder einem zweiten Zustand mit dem ersten oder dem zweiten Eingang gekoppelt ist, um die zu übertragenden modulierten Pakete oder die zu übertragenden ersten eingehenden Ströme zu liefern, und dadurch, dass die Erkennungsmittel (MD) zum Abtasten eines Teils der ersten eingehenden Ströme ausgelegt sind, um die Orte der in ihnen enthaltenen Einfügungsblöcke (BI) zu erkennen und Steuersignale einerseits an die ersten (11) und zweiten (12) Schaltmittel anzulegen, um sie in einen geschlossenen Zustand zu setzen, falls ein Einfügungsblock (BI) erkannt wird, und andererseits an die Einfügungsmittel (SW), um sie bei einer Erkennung oder Nichterkennung eines Einfügungsblocks (BI) in den ersten bzw. den zweiten Zustand zu setzen.

10. Vorrichtung nach einem der Ansprüche 3 bis 9, **dadurch gekennzeichnet, dass** die Verarbeitungsmittel (MT) Verzögerungsmittel (LR) umfassen, wobei die Verzögerungsmittel stromabwärts von den Erkennungsmitteln (MD) und/oder den Analysemitteln (MA) und stromaufwärts von den Einfügungsmitteln (SW) installiert und so ausgelegt sind, dass sie einen ersten eingehenden Strom verzögern, damit die Orte ihrer Einfügungsblöcke (BI) erkannt werden können.

11. Vorrichtung nach den Ansprüchen 1 und 2, **dadurch gekennzeichnet, dass** sie Folgendes umfasst:
- wenigstens zwei Verarbeitungswege, die jeweils zum Empfangen von ersten eingehenden Strömen ausgelegt sind, die von wenigstens zwei verschiedenen Kanälen kommen und jeweils Folgendes umfassen: i) erste Konvertierungsmittel (C1j) zum Konvertieren der in analoger Form vorliegenden ersten eingehenden Ströme in digitale Signale, ii) Analysemittel (MAj) zum Erkennen jedes Kennwertes der Träger der ersten eingehenden Ströme, die von den ersten Konvertierungsmitteln (C1j) geliefert werden, und zum Liefern von ersten Signalen, die für jeden erkannten Kennwert repräsentativ sind, und iii) Erkennungsmittel (MDj), die in Anwesenheit eines ersten eingehenden Stroms, der Einfügungsblöcke (BI) umfasst, die Präambeln enthalten, die durch gewählte Symbole definiert werden, wenigstens einen Teil der Symbole erkennen, die die Präambeln definieren, innerhalb von Zeitfenstern, die durch Signalisierungsinformationen definiert werden, und zweite Signale zu liefern, die für zeitliche Positionen von wenigstens einigen der Einfügungsblöcke (BI) repräsentativ sind,
- Steuermittel (MCT), die ausgelegt sind zum: i) Auswählen des ersten Stroms von einem der Verarbeitungswege in Abhängigkeit von dritten Signalisierungssignalen, ii) Definieren von Signalisierungsinformationen, die für Erkennungszeitfenster repräsentativ sind, auf der Basis der dritten Signalisierungssignale, und Übermitteln dieser Signalisierungsinformationen zu den relevanten Erkennungsmitteln (MDj), und iii) Liefern des ersten gewählten eingehenden Stroms, der von zweiten Signalen begleitet wird, die für die zeitlichen Positionen der zu ersetzenden Einfügungsblöcke (BI) repräsentativ sind,
- Modulationsmittel (MO), die zum Modulieren der zu übertragenden Pakete ausgelegt sind, gemäß der ersten Modulation und unter Berücksichtigung der ersten von den Verarbeitungswegen gelieferten Signale, und zum Ersetzen, zu von den zweiten Signalen definierten Zeitpunkten, von wenigstens einigen der erkannten und im ersten eingehenden Strom enthaltenen Einfügungsblöcke (BI) durch die modulierten Pakete, um einen ersten eingehenden Strom mit eingefügten Paketen zu liefern, und
- zweite Konvertierungsmittel (C2) zum Konvertieren des in digitaler Form vorliegenden ersten eingehenden Stroms mit eingefügten Paketen in analoge Signale, die von den Modulationsmitteln (MO) geliefert werden.

12. Vorrichtung nach einem der Ansprüche 1 bis 11, **dadurch gekennzeichnet, dass** die Größe der Einfügungsblöcke (BI) im Wesentlichen gleich der eines Pakets ist, das in einem Strom enthalten ist.

13. Vorrichtung nach Anspruch 12, **dadurch gekennzeichnet, dass** die Verarbeitungsmittel (MT) in Anwesenheit eines ersten eingehenden Stroms, der Gruppen von ersten und zweiten aufeinander folgenden Einfügungsblöcken umfasst, so ausgelegt sind, dass sie wenigstens einige der zweiten Einfügungsblöcke mit zu übertragenden modulierten Paketen ersetzen.

14. Vorrichtung nach einem der Ansprüche 1 bis 13, **dadurch gekennzeichnet, dass** die Größen der Einfügungsblöcke (BI) von einem ersten eingehenden Strom zu einem anderen variieren.

15. Vorrichtung nach einem der Ansprüche 1 bis 14, **dadurch gekennzeichnet, dass** die Verarbeitungsmittel (MT) zum Verarbeiten von ersten eingehenden Strömen ausgelegt sind, die wenigstens eine Frequenzänderung erfahren haben.

16. Vorrichtung nach einem der Ansprüche 1 bis 15, **dadurch gekennzeichnet, dass** die Verarbeitungsmittel (MT) zum Verarbeiten von ersten eingehenden Strömen ausgelegt sind, die von einem Kommunikationsgerät des Netzes übertragen werden, das ausgewählt ist aus einer Gruppe, die Satellitenkommunikationsgateways (PA), Kommunikationsendgeräte (Ti) und Kommunikationssatelliten (SA) umfasst.

17. Vorrichtung nach einem der Ansprüche 11 bis 16, **dadurch gekennzeichnet, dass** die Verarbeitungsmittel (MT) zum Benutzen der dritten Signalisierungssignale ausgelegt sind, um zu übertragende Pakete verzögerungsfrei in erste eingehende Ströme einzufügen.

18. Datenstromempfänger (CT) für einen Kommunikationssatelliten (SA) in einem Kommunikationsnetz, **dadurch gekennzeichnet, dass** er wenigstens einen Empfangsweg (MRj, CF1j, Fj, CF2j, CPj), der so ausgelegt ist, dass er erste mit einem Kanal assoziierte eingehende Ströme in analoger Form empfängt, und wenigstens eine Stromverarbeitungsvorrichtung (D) nach einem der vorherigen Ansprüche umfasst, die mit wenigstens einem Empfangsweg gekoppelt ist.

19. Empfänger nach Anspruch 18, **dadurch gekennzeichnet, dass** er mehrere Empfangswege (MRj, CF1j, Fj, CF2j) umfasst, die mit einer Anzahl von Stromverarbeitungsvorrichtungen (D) gekoppelt sind, die geringer ist als die Zahl der Empfangswege.

20. Empfänger nach Anspruch 19, **dadurch gekennzeichnet, dass** die Empfangswege (MRj, CF1j, Fj, CF2j) jeweils mit der Stromverarbeitungsvorrichtung (D) wenigstens durch die Kopplungsmittel (CPj) mit einem Eingang, einem ersten Ausgang und einem zweiten mit der Vorrichtung (D) gekoppelten Ausgang gekoppelt sind, und dadurch, dass er Auswahlmittel (MS) mit einem Eingang, der so ausgelegt ist, dass er mit ersten von der Stromverarbeitungsvorrichtung (D) gelieferten eingehenden Strömen versorgt wird, und mit ersten jeweiligen Ausgängen der Verbindungsmittel (CPj) gekoppelten Eingängen und einer Anzahl von Ausgängen umfasst, die gleich der Zahl der Empfangswege ist, und die zum Liefern der ersten eingehenden Ströme zu einem der Ausgänge ausgelegt sind, die an einem der Eingänge in Abhängigkeit von Signalisierungssignalen ankommen.

21. Empfänger nach einem der Ansprüche 18 bis 20, **dadurch gekennzeichnet, dass** er Demodulationsmittel umfasst, die zum Demodulieren von modulierten zweiten eingehenden Strömen ausgelegt sind, um demodulierte Datenpakete zu liefern, die zum Einfügen in die ersten eingehenden Ströme ausgelegt sind.

22. Empfänger nach einem der Ansprüche 19 bis 21, **dadurch gekennzeichnet, dass** er Schaltmittel mit wenigstens zwei Eingängen zum Empfangen von ersten eingehenden Strömen, die von verschiedenen Satellitenkommunikationsgateways (PA) kommen, und wenigstens einem Ausgang zum selektiven Versorgen von mit einer Stromverarbeitungsvorrichtung (D) gekoppelten Empfangswegen (MRj, CF1j, Fj, CF2j) mit ersten eingehenden Strömen umfasst.

23. Kommunikationssatellit (SA) für ein Kommunikationsnetz, **dadurch gekennzeichnet, dass** er wenigstens eine Datenstromverarbeitungsvorrichtung (D) nach einem der Ansprüche 1 bis 17 umfasst.

24. Kommunikationssatellit (SA) für ein Kommunikationsnetz, **dadurch gekennzeichnet, dass** er wenigstens einen Empfänger (CT) nach einem der Ansprüche 18 bis 22 umfasst.

25. Satellitenkommunikationsgateway (PA) für ein Kommunikationsnetz, das wenigstens einen Kommunkationssatelliten (SA) nach einem der Ansprüche 23 und 24 umfasst, **dadurch gekennzeichnet, dass** es so ausgelegt ist, dass es für den Satelliten (SA) bestimmte erste eingehende Ströme erzeugt, deren Träger eine erste Modulation hat und die Einfügungsblöcke (BI) an gewählten Stellen umfasst.

## Claims

1. A data stream processing device (D) for a communication satellite (SA) in a communication network, **characterised in that** it comprises processing means (MT) that are arranged, in the case of the reception of a first incoming data stream wherein the carrier has a first modulation and comprises selected insertion blocks (BI) at selected locations:
- to detect said insertion blocks (BI) and at least one characteristic of the carrier of said first incoming stream, selected from an amplitude, a frequency, a phase and a rate;
- to modulate, in accordance with said first modulation and taking into account each detected characteristic, data packets to be transmitted to a destination that is common to that of the first incoming stream; and
- to replace at least some of said insertion blocks (BI) that are detected in said first non-demodulated incoming stream with said modulated packets, the replacement being carried out by symbols that are coherent with the symbols of the rest of the carrier given that the replaced part of said first incoming stream reproduces said characteristic of the carrier of said first stream, so that said first stream is transmitted with said first modulation by said satellite (SA) toward said common destination.

2. The device according to claim 1, **characterised in that** said processing means (MT) are arranged to detect the amplitude, frequency, phase and rate characteristics of the carriers of the first incoming streams received.

3. The device according to claim 1 or 2, **characterised in that** said processing means (MT) comprise analysis means (MA) that are arranged to detect each characteristic of the carriers of the first incoming streams received, modulation means (MO) that are arranged to modulate said packets to be transmitted, in accordance with said first modulation and taking into account each characteristic that is detected by said analysis means (MA), and insertion means (SW) that are arranged to replace at least some of said detected insertion blocks (BI) with said packets that are modulated by said modulation means (MO), with a view to transmitting said first incoming stream.

4. The device according to any one of claims 1 to 3, **characterised in that** said processing means (MT) comprise detection means (MD) that are arranged, in the presence of a first incoming stream comprising insertion blocks (BI) that include preambles defined by the selected symbols, to detect at least part of said symbols that define said preambles.

5. The device according to claim 4, **characterised in that** said detection means (MD) are arranged to measure the time interval between detections of successive preambles and to compare each measured interval with a threshold interval so as to only authorise the replacement of an insertion block (BI) with a modulated packet to be transmitted when a measured interval is substantially equal to said threshold interval or to an integer multiple of said threshold interval.

6. The device according to any one of claims 3 to 5, **characterised in that** it comprises i) first conversion means (C1) that are placed upstream of said analysis means (MA) and/or said detection means (MD) and are arranged to convert first incoming streams that arrive in an analogue form into digital signals, ii) second conversion means (C2) that are placed downstream of said insertion means (SW) and are arranged to convert first incoming streams that arrive in digital form into analogue signals, and iii) storage means (MY) that are coupled to said modulation means (MO) and to said insertion means (SW) and are arranged to store said modulated packets to be transmitted.

7. The device according to claim 6, **characterised in that** it comprises timing means (GC) that are arranged to define a selected operating time for said processing means (MT) and said first (C1) and second (C2) conversion means.

8. The device according to claim 6 or 7, **characterised in that** said detection means (MD) are arranged to duplicate said first incoming streams so as to detect the locations of said insertion blocks (BI) they contain, and **in that** said analysis means (MA) are arranged to duplicate said first incoming streams so as to detect each characteristic of the carriers.

9. The device according to any one of claims 3 to 5, **characterised in that** said analysis means (MA) are arranged to sample part of said first incoming streams so as to detect each characteristic of the carriers and to apply to an output signals that represent each detected characteristic of the carriers, **in that** it comprises first switching means (11) that comprise one input that is designed to receive packets to be transmitted, one control input and one output that is designed to supply said modulation means (MO) with said packets to be transmitted in the event of being placed in a closed state, **in that** said processing means (MT) comprise second switching means (12) that comprise one input that is coupled to the output of said analysis means (MA) so as to receive signals that represent each detected characteristic of the carriers, one control input and one output that is designed to supply said modulation means (MO) with said signals that represent each detected characteristic of the carriers in the event of being placed in a closed state, **in that** said insertion means (SW) are arranged in the form of a switch that comprises a first input that is coupled to the output of said modulation means (MO), a second input receiving said first incoming streams, a third control input and an output that is designed to be coupled to the first or the second input in the event of being placed in a first or a second state so as to deliver said modulated packets to be transmitted or said first incoming streams to be transmitted, and **in that** said detection means (MD) are arranged to sample part of the first incoming streams so as to detect the locations of the insertion blocks (BI) they contain and to deliver control signals, on the one hand, to said first (11) and second (12) switching means so as to place them in a closed state in the case of the detection of an insertion block (BI) and, on the other hand, to said insertion means (SW) so as to place them in said first or second state in the case of the detection or the absence of detection of an insertion block (BI).

10. The device according to any one of claims 3 to 9, **characterised in that** said processing means (MT) comprise delay means (LR), which are installed downstream of said detection means (MD) and/or said analysis means (MA) and upstream of said insertion means (SW), and are arranged to delay a first incoming stream so as to allow the detection of the locations of its insertion blocks (BI).

11. The device according to claim 1 or 2, **characterised in that** it comprises:
- at least two processing paths that are each designed to receive first incoming streams that originate from at least two different channels and each comprise i) first conversion means (C1j) that are arranged to convert first incoming streams that arrive in an analogue form into digital signals, ii) analysis means (MAj) that are arranged to detect each characteristic of the carriers of the first incoming streams that are delivered by said first conversion means (C1j) and to deliver first signals that represent each detected characteristic, and iii) detection means (MDj) that are arranged, in the presence of a first incoming stream that comprises insertion blocks (BI) that include preambles defined by selected symbols, to detect at least part of said symbols that define said preambles within time windows defined by signalling information, and to deliver second signals that represent temporal positions of at least some of said insertion blocks (BI),
- control means (MCT) that are arranged i) to select the first data stream of one of said processing paths as a function of third signalling signals, ii) to define signalling information that represents detection time windows on the basis of said third signalling signals and to communicate this signalling information to the relevant detection means (MDj), and iii) to deliver the first selected incoming stream that is accompanied by second signals that represent said temporal positions of the insertion blocks (BI) to be replaced,
- modulation means (MO) that are arranged to modulate said packets to be transmitted, in accordance with said first modulation and taking into account said first signals that are delivered by said processing paths, and to replace, at instants defined by said second signals, at least some of said insertion blocks (BI) that are detected and contained in said first incoming stream with said modulated packets, so as to deliver a first incoming stream with inserted packets, and
- second conversion means (C2) that are arranged to convert into analogue signals the first incoming stream with inserted packets in digital form with inserted packets that are delivered by said modulation means (MO).

12. The device according to any one of claims 1 to 11, **characterised in that** the dimensions of said insertion blocks (BI) are at least equal to that of a packet that is contained in a stream.

13. The device according to claim 12, **characterised in that** said processing means (MT) are arranged, in the presence of a first incoming stream that comprises groups of first and second consecutive insertion blocks, to replace at least some of said second insertion blocks with modulated packets to be transmitted.

14. The device according to any one of claims 1 to 13, **characterised in that** the dimensions of said insertion blocks (BI) vary from one first incoming stream to another.

15. The device according to any one of claims 1 to 14, **characterised in that** said processing means (MT) are arranged to process first incoming streams that have undergone at least one change in frequency.

16. The device according to any one of claims 1 to 15, **characterised in that** said processing means (MT) are arranged to process first incoming streams that are transmitted by communication equipment of said network that is selected from a group comprising satellite communication gateways (PA), communication terminals (Ti) and communication satellites (SA).

17. The device according to any one of claims 11 to 16, **characterised in that** said processing means (MT) are arranged to use said third signalling signals so as to insert packets to be transmitted into first incoming streams without introducing a delay.

18. A data stream receiver (CT) for a communication satellite (SA) in a communication network, **characterised in that** it comprises at least one reception path (MRj, CF1j, Fj, CF2j, CPj) that is designed to receive first incoming streams in analogue form, which are associated with a channel, and at least one stream processing device (D) according to any one of the preceding claims, which is coupled to at least one reception path.

19. The receiver according to claim 18, **characterised in that** it comprises a plurality of reception paths (MRj, CF1j, Fj, CF2j) coupled to a number of stream processing devices (D) that is less than the number of reception paths.

20. The receiver according to claim 19, **characterised in that** said reception paths (MRj, CF1j, Fj, CF2j) are each coupled to said stream processing device (D) at least by means of the coupling means (CPj) comprising one input, one first output and one second output coupled to said device (D), and **in that** it comprises selection means (MS) comprising one input that is designed to be supplied with first incoming streams delivered by said stream processing device (D) and inputs that are coupled to first respective outputs of said connection means (CPj), and a number of outputs that is equal to the number of reception paths, and arranged to apply to one of said outputs the first incoming streams that arrive on one of said inputs as a function of signalling signals.

21. The receiver according to any one of claims 18 to 20, **characterised in that** it comprises demodulation means that are arranged to demodulate second incoming streams that are modulated to deliver demodulated data packets that are designed to be inserted into the first incoming streams.

22. The receiver according to any one of claims 19 to 21, **characterised in that** it comprises switching means comprising at least two inputs that are designed to receive first incoming streams that originate from different satellite communication gateways (PA), and at least one output that is designed to selectively supply reception paths (MRj, CF1j, Fj, CF2j) that are coupled to a stream processing device (D) with first incoming streams.

23. A communication satellite (SA) for a communication network, **characterised in that** it comprises at least one data stream processing device (D) according to any one of claims 1 to 17.

24. The communication satellite (SA) for a communication network, **characterised in that** it comprises at least one receiver (CT) according to any one of claims 18 to 22.

25. A satellite communication gateway (PA) for a communication network, comprising at least one communication satellite (SA) according to one of claims 23 and 24, **characterised in that** it is arranged to generate first incoming streams that are intended for said satellite (SA), the carrier of said first incoming streams having a first modulation and comprising insertion blocks (BI) at selected locations.
